Europäisches Patentamt

European Patent Office

Office européen des brevets

(19)

(11) Publication number: **0 150 534**
A2

(12) **EUROPEAN PATENT APPLICATION**

(21) Application number: **84201858.2**

(22) Date of filing: **13.12.84**

(51) Int. Cl.⁴: **B 32 B 3/20, E 04 C 2/54**

(30) Priority: **30.01.84 AT 289/84**

(43) Date of publication of application: **07.08.85**
**Bulletin 85/32**

(84) Designated Contracting States: **AT DE FR GB IT NL**

(71) Applicant: **General Electric Plastics Structured Products Europe B.V., P.O. Box 117, NL-4600 AC Bergen op Zoom (NL)**

(72) Inventor: **Hirsch, Kurt, Pleyergasse 6, AT-2700 Wiener Neustadt (AT)**

(74) Representative: **Grever, Frederik et al, General Electric Plastics B.V. P.O. Box 117, NL-4600 AC Bergen op Zoom (NL)**

(54) **Laminate.**

(57)     The invention relates to twin wall sheet. The improvement deals with having at least one of the surfaces of at least one of the sheets having a structured surface. This results – in case of light transmitting sheets – in a diffusion of the transmitted light.

EP 0 150 534 A2

ACTORUM AG

0150534

8-CB-10.254       -1-

Laminate

The invention relates to a laminate of a light-transmitting synthetic resin having two cover plates which extend parallel to each other, and webs which are arranged at right angles thereto and extend parallel to each other.

Such known laminates are combined with glass into a composite material and are used, for example, for covering greenhouses. As a result of their special cross-section, the laminates have comparatively high ultimate stress values inspite of their thin wall thicknesses, and can be manufactured rationally in an extrusion method.

It is the object of the invention to provide a laminate of the type described in the opening paragraph which has a high light dispersion, while the known high ultimate stress values and light transmission are maintained.

According to the invention this object is achieved in that at least one cover plate of a laminate of light-transmitting synthetic resin has a structured surface.

In this manner a comparatively strong light dispersion can be achieved while in particular a high compression and bending strength are maintained, so that new possibilities of using the laminate are created. Since the contours of the object behind the laminate can no longer be recognized, the plate is particularly suitable for use in shower-baths, advertising boards, luminaires, and the like. It is of particular advantage that the thickness of the plate is very small whereas the plate has nevertheless high ultimate stress values. Experience has demonstrated that inspite of the structured surface, a very high light-transmission of 70 to 80% can be achieved dependent on the type of radiation source.

A preferred embodiment of the invention consists in that the structured surface is provided on the inside of the cover plate adjoining the webs. As a result of such an arrangement, the laminate can more easily be cleaned, since the smooth surfaces present on the outside can more easily be cleaned. The said advantages of the light dispersion are maintained unrestrictedly.

According to another advantageous embodiment the structured side of the cover plate is formed by a surface which is zig-zag shaped. As a result of this a particularly strong light dispersion can be achieved, in which an impression similar to a linear grating is formed due to a comparatively sharp separation of brighter and darker stripes. Since the incident light is scattered in many directions in a large angular range and hence the incident beam is also weakened so considerably, a cast shadow can be recognized in the primary beam. A wide light band is formed on each side of the cast shadow.

If in accordance with a further advantageous modified embodiment of the invention the overall thickness of the cover plate having a structured surface is made in a range from approximately 0.5 to 1 mm, sufficiently high ultimate stress values are obtained inspite of the incisions over the cross-section recurring periodically, which values may be compared

8-CB-10.254          -3-

with the opposite cover plate which may be constructed
to have a slightly smaller thickness.

An advantageous further embodiment of the
laminate according to the invention consists in that
the structured surface of the cover plate is formed by
a surface which has an undulatory form as a result of
which the grating effect formed by dark and bright
stripes seems to be smoother.

Finally, a further embodiment of the invention
is characterized in that the variation of the structured surface is irregular. A total distortion of the
contours of the object to be covered is obtained from
the resulting different scattering of the incident
light, so that recognition is impossible.

The invention will now be described in greater
detail with reference to embodiments shown in the
accompanying drawing, in which
Figure 1 is a perspective view of a laminate
formed according to the invention,
Figures 2, 3 and 4 are side elevations each
time of differently formed laminates in accordance with
the invention.

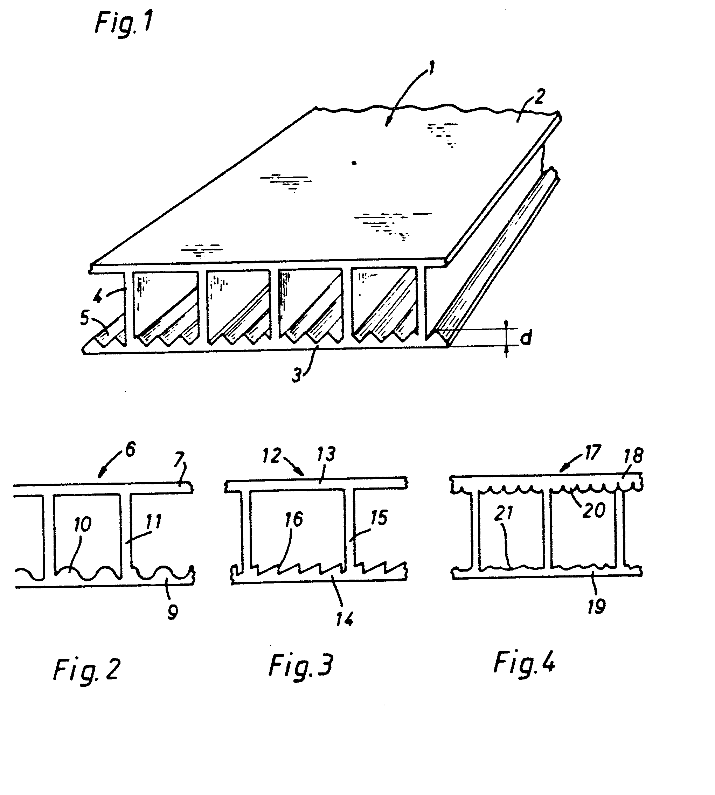

The laminate 1 shown in Figure 1 is composed
of two parallel extending cover plates 2, 3 and a
number of likewise parallel extending webs 4. These
continuously formed webs 4 extend at right angles to
the two cover plates 2, 3 and are formed integrally
with the cover plates 2, 3 by extrusion. The surface of
the top cover plate 2 is formed to be smooth and flat,
respectively, on both sides, the lower cover plate 3
having a structured surface on its inside facing the

8-CB-10.254          -4-

webs 4. Said structured surface has a cross-section formed in a zig-zag manner and comprises ribs extending in the longitudinal direction of the webs, respectively. The thickness $d$ of the lower cover plate is in a range from approximately 0.5 to 1 mm.

In a test, the light transmission was measured and compared with a known laminate having two smooth cover plates. As usual, the light transmission T was defined by

$$T = J : J_o \times 100\%,$$

wherein $J_o$ is the incident light intensity and quantity of light, respectively, and J is the transmitted light intensity and quantity of light, respectively. It was established that the light transmission of the laminate 1 formed according to the invention is only at most 10% lower than in the known laminate. In order to be able to perform, in the laboratory, accelerated weathering effects which are produced in synthetic resin parts by the exposure to sun-light, a so-called spectrotest was carried out. In this test the radiation of a Xenon high-pressure burner was made equal to natural conditions by two IR filters. The light was scattered by a disk of frosted glass. The laminate according to the invention was placed at a distance of 10 cm from the disk of frosted glass, and a stern pyranometer was arranged behind the sample. A light transmission of 75.2% could be established in this spectrotest.

In order to demonstrate the effect of the reduced recognition of objects behind the new laminate, a rectangular diaphragm was inserted in a projector instead of a dia slide and projected on a screen. The laminate samples were inserted into the path of radiation at a distance of 1.5 m from the projection

8-CB-10.254          -5-

screen and the samples appearing on the screen were photographed. It was established that the inner structured laminate throws a cast shadow and at the same time causes a wide light band to be formed on each side of the cast shadow. The explanation for this is that a considerable part of the incident light is scattered in many directions at a large angle. The beam of incident light is also weakened so considerably that a cast shadow can be recognized in the primary beam.

A laminate 6 shown in Figure 2 comprises an upper cover plate 7 having a smooth surface on both sides, whereas the lower cover plate 9 extending parallel thereto has a structured undulatory surface 10 on its inside. Both cover plates 7, 9 are connected together by mutually parallel extending webs 11.

The embodiment shown in Figure 3 of a laminate 12 having cover plates 13, 14 and webs 15 comprises on the inside of the lower cover plate 14 a surface 16 which is sawtooth-shaped in cross-section.

Figure 4 finally shows a laminate 17 which has a structured surface 20, 21 on both inner sides of the cover plates 18, 19. The upper structured surface 20 is shaped so as to be undulatory, the lower structured surface 21 being formed irregularly.

8-CB-10.254                    -6-

CLAIMS:

1.       A laminate of a light-transmitting synthetic resin having two mutually parallel cover plates and mutually parallel extending webs extending at right angles thereto, characterized in that at least one cover plate (2, 9, 14, 18, 19) comprises a structured surface (5, 10, 16, 20, 21).

2.       A laminate as claimed in Claim 1, characterized in that the structured surface (5, 10, 16, 20, 21) is provided on the inside of the cover plate (3, 9, 14, 18, 19) adjoining the webs (4, 11, 15).

3.       A laminate as claimed in Claim 1 or 2, characterized in that the structured side of the cover plate (3) is formed by a surface (5) which in cross-section is zig-zag-shaped.

4.       A laminate as claimed in any of the Claims 1, 2 or 3, characterized in that the overall thickness of the cover plate (3) comprising a structured surface is in a range from approximately 0.5 to 1 mm.

5.       A laminate as claimed in any of the Claims 1 to 4, characterized in that the structured surface (10) of the cover plate (9) is formed as a surface which is undulatory in cross-section.

6.       A laminate as claimed in any of the Claims 1 to 5, characterized in that the structured surface is formed so as to vary irregularly (Figure 4).

1|1

**Fig.1**

1

2

4

5

3

d

6   7

10   11

9

**Fig.2**

12   13

16   15

14

**Fig.3**

17   18

21   20

19

**Fig.4**